# EUROPEAN PATENT SPECIFICATION

(11) **EP 1 204 233 B1**
(45) Date of publication and mention of the grant of the patent: **26.05.2004**
(21) Application number: 00123913.6
(22) Date of filing: 03.11.2000
(51) Int. Cl.: H04L 5/02, H04L 27/26

(54) **Method of transmission using a shared channel**
Verfahren zur Übertragung unter Verwendung eines geteilten Kanals
Procédé de transmission à canal partagé

(43) Date of publication of application: 08.05.2002
(73) Proprietor: Sony International (Europe) GmbH, 10785 Berlin (DE)
(72) Inventor: Jürgensen, Jens-Uwe, Sony Inter. (Europe) GmbH, Hedelfinger Strasse 61, 70327 Stuttgart (DE); Wang, Zhaocheng, Sony International (Europe) GmbH, Hedelfinger Strasse 61, 70327 Stuttgart (DE); Stirling-Gallacher, Richard, Hedelfinger Strasse 61, 70327 Stuttgart (DE)
(74) Representative: Körber, Martin, Dipl.-Phys.

(56) References cited:
- FR-A- 2 777 407
- GB-A- 2 315 388
- YEUNG C K ET AL: "A FIXED-ASSIGNMENT-FDMA/MULTICARRIER-CDMA HYBRID SYSTEM FOR STATISTICAL MULTIPLEXING" IEEE INTERNATIONAL CONFERENCE ON UNIVERSAL PERSONAL COMMUNICATIONS, vol. 4, 6 November 1995 (1995-11-06), pages 517-521, XP000675315 New York, USA ISBN: 0-7803-2955-4
- TURINA D ET AL: "A PROPOSAL FOR MULTI-SLOT MAC LAYER OPERATION FOR PACKET DATA CHANNEL IN GSM" INTERNATIONAL CONFERENCE ON UNIVERSAL PERSONAL COMMUNICATIONS, IEEE, vol. 2, 29 September 1996 (1996-09-29), pages 572-576, XP000198340 New York, USA

## Description

The present invention relates to a transmission structure for transmitting data in wireless communication systems, in particular to a transmission structure for transmitting data with dynamically changing data rates.

Usually, in TDMA/FDMA systems, e.g., OFDM systems, the bandwidth required for a particular transmission depends strongly on the data transmission rate required for the service used by the subscriber. Hereby, the required data transmission rate usually is not necessarily a fixed value but is functionally dependent on the user actions and the transactions caused thereof. Usually, transmission capacity for the transmission of data is assigned to a particular user by allocating a number of adjacent subcarriers and consecutive time slots forming a block in the time-frequency domain of the transmission system which defines a transmission channel for that user. The size of the assigned block hereby corresponds to the data transmission rate required.

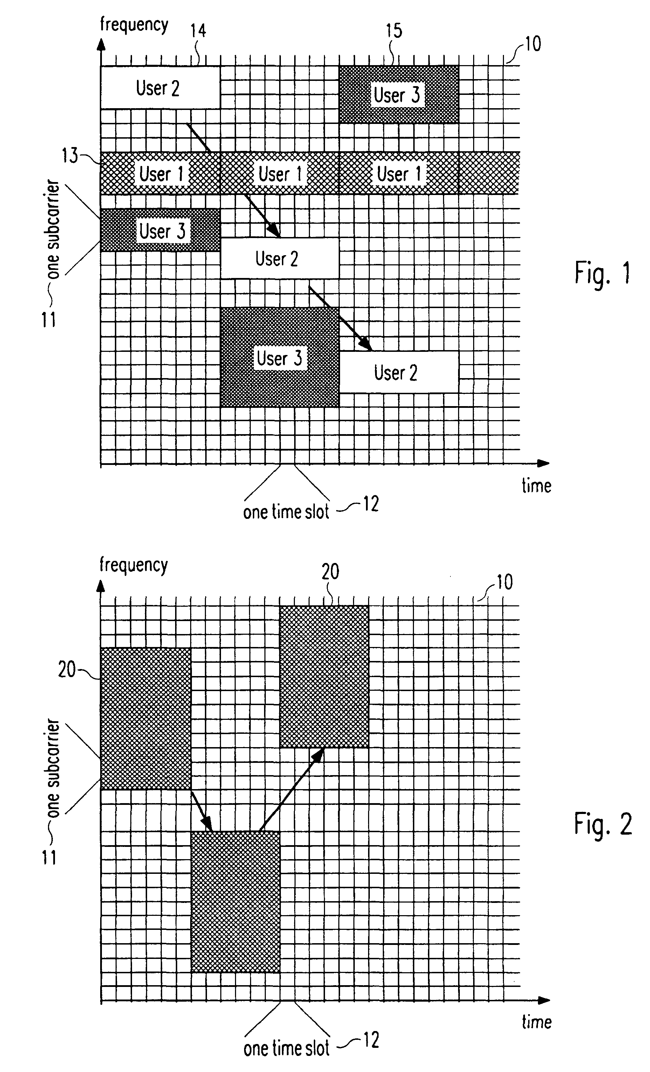

The assignment of the requested transmission capacity need not necessarily be static for the time period of the link, but can also change across the time-frequency grid of the OFDM system. In the following, a transmission capacity can also be referred to as a transmission resource or simply as a recource. A mapping of a varying resource assignment on the time-frequency grid of the OFDM system will further be addressed as a hopping pattern for a user, hereby referring to the description of a change in the used frequency band as hopping. Fig. 1 shows three generalised hopping patterns mapped on the time-frequency grid of an OFDM system. The resources assigned to user 1 are statically allocated, fixed in frequency and with a fixed number of subcarriers. The assignment for user 2 hops in frequency from time to time in a pseudo-random fashion but also provides a fixed number of subcarriers. For user 3, the assignment not only hops pseudo-randomly in frequency from time to time but further shows a variable number of subcarriers, so that a variable data transmission rate can be achieved. Compared to the assignment scheme for user 1 the scheme for user 2 has a built in frequency diversity providing a less susceptable communication link.

The hopping pattern for user 3 takes into account, that the data rate required by the respective user is not a fixed value for the whole period of a link but may vary within very short time intervals e. g. when a user downloads an image in a wireless internet connection.

The magnitude of a required transmission data rate can be estimated from the type of the service a user requests. Establishing e.g. a link for video conferencing asks for a much higher data rate than reading, typing or sending email or SMS messages. The provision of resources in an OFDM system, assigning a fixed number of subcarriers to a communication link have to be calculated based on the expected peak-data transmission rate, which actually will be achieved from time to time only. In practice, most of the time period a large part of the allocated resources remains unused, thus reducing the overall capacity of the system. A dynamic resource allocation is therefore the preferred assignment method.

EP 0 932 284 A2 discloses an OFDM communication system, in which the frequency bandwidth can be adapted to the actually required transmission bandwidth or data transmission rate, respectively.

An OFDM system in which the operating parameter and/or characteristics can be dynamically changed is disclosed in EP 0 869 647 A2. E. g., the symbol duration, the number of subcarriers and/or the number of bits per symbol per subcarrier can be changed. In particular, a dynamic change of the number of subcarriers is proposed for adapting the actual bandwidth to alterations in the required data rate, e. g. when large amounts of data have to be downloaded.

The proposals allow a dynamic change of a resource assignment by dynamically altering the number of subcarriers used for the communication link but at the expense of a relatively high control effort, due to the fact that the assignments for all users in the time-frequency grid of the OFDM system may have to be updated continuously.

FR-A-2 777 407 discloses a transmission structure and a transmission method for transmitting data in a wireless communication system, whereby each user has a fixedly allocated transmission channel for transmitting data and a common shared transmission channel is provided for all users to transmit additional data in at least a part of said common shared transmission channels, in which data are transmitted in transmission channels defined by frequency subcarriers and time slots. The fixedly allocated transmission channels for each user (dedicated channels) and the common shared transmission channel are in different frequency ranges and do not share a common band width.

The object of the present invention is therefore to provide a transmission structure and a transmission method with a dynamic frequency allocation such that the transmission capacity assigned to a user varies according to a variation in the data transmission rate required by the user by causing only a small burden of control but still providing a high flexibility and efficiency.

The above object is achieved by a transmission structure for transmitting data in a wireless communication system according to claim 1 and a method for transmitting data in a wireless communication system according to claim 17. The transmission structure according to the present invention comprises a transmission means for transmitting data in transmission channels defined by frequency subcarriers and time slots in a time/frequency grid of the wireless communication system, whereby a fixedly allocated transmission channel for each user and common shared transmission channel for all users are provided in a said time/frequency grid of the wireless communication system, said transmitting means transmitting data in an fixedly allocated transmission channel with one or more frequency subcarriers and consecutive time slots and said transmitting means, when a data rate transmission exceeding the fixedly allocated resources is required, transmitting additional data in at least a part of said common shared transmission channel.

The object is further achieved by a mobile terminal for a wireless communication system, comprising the above transmission structure, whereby a processing means determines the required data transmission rate and generates a request message to be transmitted by a transmitting means to a base station for requesting the allocation of at least a part of the common shared transmission channel corresponding to the required data transmission rate, and the processing means receives the allocation details from the base station by a receiving means and modulates the data to be transmitted on the allocated transmission channels accordingly.

Further, the object is achieved by a base station for a wireless communication system, comprising an above transmission structure, whereby a processing means allocates in response to a data transmission rate requested by a mobile terminal at least a part of the common shared transmission channel to a communication link established to the mobile terminal, and the processing means sends a message to the mobile terminal by a transmitting means comprising the allocation details.

The proposed transmission structure allows an improved performance of the wireless communication system by providing a common shared transmission channel for only temporarily required additional transmission capacity. Further, the burden of control is kept low, because the resource assignment as it is mapped on the time-frequency grid of the OFDM system does not have to be rearranged.

Further advantageous features are claimed in the respective subclaims.

Advantageously, the transmitting means transmits the additional data in at least a part of the common shared transmission channel depending on a required data transmission rate, hereby relocating the additional data to the common shared transmission channel according to the required data transmission rate. Further advantageously, a processing means determines for this purpose the required data transmission rate and allocates a respective part of the common shared transmission channel depending on the data transmission rate for the transmission of the data.

The common shared transmission channel is advantageously completely assigned to a user for a defined period of time, keeping the control effort or the respective burden of control low or, alternatively advantageously, the common shared transmission channel is partitioned into a plurality of common shared transmission subchannels, whereby one or more respective common shared transmission subchannels are allocated to a user for transmitting additional data so that a plurality of users can share the additional resources provided by the common shared transmission subchannels simultaneously. Hereby, the number of subcarriers and time slots assigned to a common shared transmission subchannel is either fixed, varies from one to any other, or is fixed in a part of said common shared transmission channel and varies from one to any other in another part of that common shared transmission channel. The provision of fixedly and/or variably sized subchannels allows to adapt the wireless communication system to the needs of the services provided. The system performance is further improved by a partition of the common shared transmission channel into common shared transmission subchannels according to a predefined partitioning scheme and furthermore by means of this partitioning scheme, providing subchannels adapted for a definite increase of the data transmission rate.

To provide a maximum flexibility of the system, a defining means defines at least one common shared transmission subchannel within the common shared transmission channel just at the point of time additional data have to be transmitted.

The transmission structure according to the present invention is advantageously be implemented in a wireless OFDM, FDMA or TDMA communication system.

In the following description, the present invention is explained in more detail in relation to the enclosed drawings, in which
Fig. 1 shows various transmission capacity assignment schemes of the prior art,
Fig 2 shows the hopping pattern for an OFDM shared channel (OSCH),
Fig. 3 shows the hopping pattern for allocating all available OSCH resources to one user channel,
Fig. 4 shows the hopping pattern for one user allocated to a part of the OSCH rescources ,
Fig. 5 shows a block diagram of a processing means in a mobile terminal according to the present invention,
Fig. 6 shows a block diagram of a processing means in a base station according to the present invention.

In the drawings, like elements have been assigned the same reference numerals.

In an OFDM system, the information to be transmitted is modulated onto a number of subcarriers 11 orthogonal to each other in a frequency domain. A plurality of subcarriers can be allocated to a variable number of channels, each channel containing a variable number of subcarriers, depending on the signals transmission rate requested. Each user or each communication, link can be assigned to one or more blocks 13, 14, 15, 20 across the time-frequency grid 10 of the OFDM system whereby a block combines a number of adjacent subcarriers and a number of consecutive time slots. The size of the block is based on the data rate required by the user or for the communication link, respectively.

Fig. 1 shows three differing prior art hopping patterns representing three different types of transmission capacity assignments in an OFDM communication system. The block 13 allocated for user 1 in the time-frequency grid 10 of the OFDM system keeps constant in size for the existence of the link and does not change its frequency position. The size of the block is hereby defined by the number of subcarriers 11 and the number of time slots 12 which constitute the block. The resource assignment for user 1 provides no means to react to variations in the current data transmission rate of the respective communication link. Therefore, the block size has to be adapted to the maximum data transmission rate to be expected, hereby wasting a good part of the system's resources. Furthermore, by statically keeping the frequency position for the communication channel once assigned, neither frequency nor interference diversity is optimised.

To obtain frequency and/or interference diversity, a hopping pattern shown for user 2 is used. Thereby, the assignment for the block 14 of user 2 changes pseudo-randomly across the frequency-time grid 10 of the OFDM system. Similar to the above described case, the resources assigned to user 2 are kept constant for the time of the communication link being, so that either a considerable part of the provided resources stays unused most of the time or, if the provided resources are not calculated according to the maximum data transmission rate to be expected, then bottlenecks in the transmission rate have to be expected.

With the hopping pattern for user 3 the requirement for a dynamic resource assignment respectively is put into effect with a dynamic frequency allocation. The number of subcarriers 11 assigned to block 15 for user 3 varies according to the variations in the requested data transmission rate.

For reducing the burden of control associated with the implementation of a hopping pattern, the selected hopping pattern will be repeated every frame, superframe or at any other predefined fixed time period. Further, the hopping pattern will already be assigned to each user during link initialisation and the establishing phase and will not change before the link is finally released. These requirements are not in agreement with adapting the hopping pattern dynamically according to requirements set by events external to the system, which are not controlled by the system itself. Therefore, an implementation of a hopping scheme as it is shown for user 3, implies a substantial increase in the necessary control burden.

A system according to the present invention provides one common physical channel 20 defined by a number of subcarriers 11 and time slots 12 across the time-frequency grid of the OFDM system. This channel can be accessed and shared by all users in the time-frequency domain when a high data rate transmission exceeding the individually allocated resources is required. In the following description, this common shared transmission channel is referred to as OFDM shared channel (OSCH). From the system's view, this OSCH is treated like any other user.

A typical hopping pattern for an OSCH is shown in Fig. 2. The resource assignment 20 according to this hopping pattern varies pseudo-randomly across the frequency-time grid 10 of the OFDM system, whereby the hopping pattern is repeated within one frame, one superframe or within any predefined fixed time period. Due to the fact that the OFDM shared channel is treated in the same way than any other user in the OFDM system, the hopping pattern can be assigned at the initialisation of the OFDM shared channel and its establishing phase. The burdon of control associated therewith thus is not greater than for a normal user channel.

When the data rate in the communication link for a particular user exceeds the capacity provided by the respective resource assignment for this user an additional service from the OSCH is required. Hereby a user is assigned to a small number of subcarriers and time slots within the OSCH to cover his requirements for more transmission capacity. Generally, additional transmission capacities are only needed for a limited period of time because the capacities assigned to a user are calculated on the basis of the data rates required for the type of service requested and the general requirement of achieving nearly full capacity utilisation. The capacity allocated for a particular user is a percentage of the highest data rate which is to be expected for the requested service. The actual value may be the average data rate of the particular service or be based on an emperically established figure, whereby this figure may be deduced from a compromise between an optimum capacity utilisation and a minimising of the control burden.

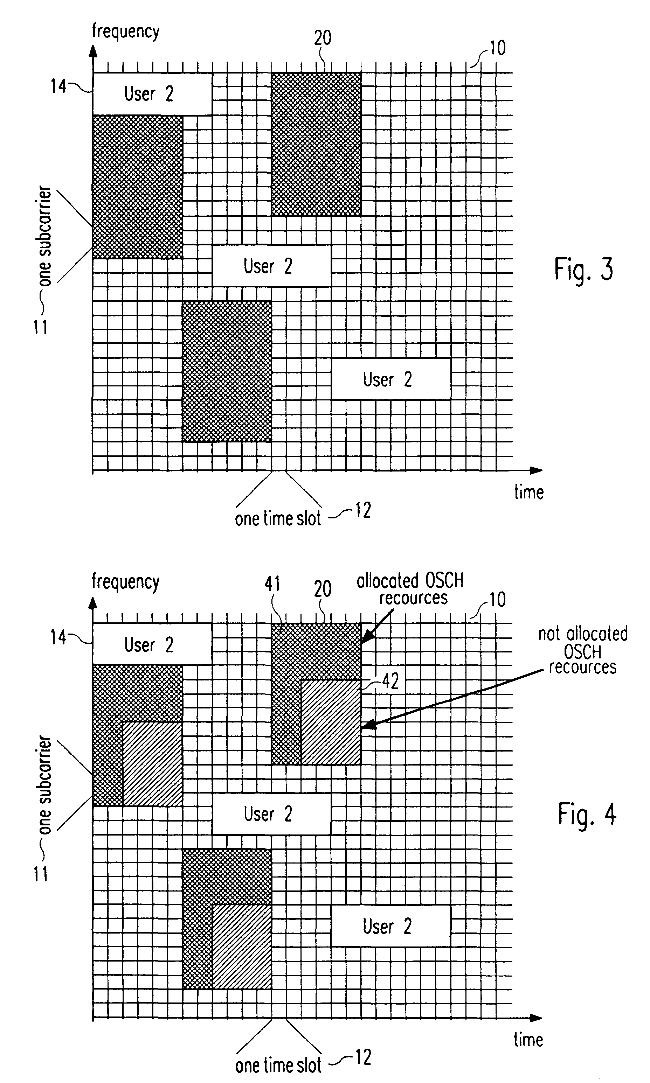

The additional resources can be assigned to a user in various ways. The example illustrated in Fig. 3 shows the hopping pattern for user 2 from Fig. 1 and the hopping pattern for the OFDM shared channel 20 from Fig. 2. Assuming, a higher data rate is required by user 2 than can be managed with the resources 14 assigned to him, then user 2 gets full access to the resources provided by the OSCH 20. The common shared transmission channel offers enough capacity to cover big data rates. As soon as the additional resources are no longer needed by the user, the OSCH is released to be used by other users. This means that a plurality of subscribers can alternately use the common shared transmission channel. To avoid bottlenecks in the data transmission for particular users, more than one OSCH can be realised in the OFDM wireless communication system according to the present invention. Hereby, the size of the different OSCH may vary due to the fact that the additional capacity requirements differ between the services used by the subscribers.

Alternatively to the above described embodiment, an OSCH can be partitioned so that a plurality of common shared transmission subchannels are formed therein, whereby each of the subchannels can be allocated to any user in the system. One of the numerous partitioning schemes which can be applied is shown in Fig. 4. The subchannel 41 assigned to user 2 for increasing its basical transmission capacity given by the resources of block 14 is formed by a number of adjacent subcarriers 11 and a number of consecutive time slots, which can change from subcarrier to subcarrier. The capacity 42 not used by user 2 may simultaneously be used by one or more other subscribers.

The allocation of resources within the common shared transmission channel can be done just in time or can be selected by picking out proper subchannels predefined in each OSCH. Thereby, the size of the single subchannels reflects a certain amount of transmission capacity. In other words, the common shared transmission subchannels defined within an OSCH may change in size for providing a variety of additional transmission capacity units adapted to the most frequent requests.

According to a further embodiment of the present invention, the OSCH is subdivided into subchannels of equal size. Hereby a subchannel represents the smallest possible transmission data rate increment. For a user requesting a certain transmission capacity related to the data transmission rate required by his communication link an appropriate number of those equally sized subchannels is allocated.

Alternatively, a common shared transmission channel is subdivided into a plurality of subchannel sets, whereby each set of subchannels contains differently sized subchannels, which can be combined to achieve any possible transmission capacity value only limited by the total size of the common shared transmission channel. By combining those sets of subchannels an enormous versatility for establishing proper buffer capacity is given.

It has to be noted, that additional transmission capacities are not necessarily allocated within one OSCH only, but can be distributed over to or more common shared transmission channels.

By allocating additional transmission capacity for a user within a common shared transmission channel only a small control overhead is necessary for allocating additional system resources. The only additional burden of control necessary is that of picking out an appropriate part from the additional resources already provided. The total burden of control therefore is by far lower than the burden of control associated with an assignment scheme illustrated for user 3 in Fig. 1. Furthermore, by relocating capacity only temporarily required to a common shared transmission channel, the capacity utilisation of each user's assignment is optimised thereby increasing the overall capacity of the system. With the OSCH hopping in frequency, a good frequency diversity as well as an interference diversity is further achieved for the additional data transmission resources.

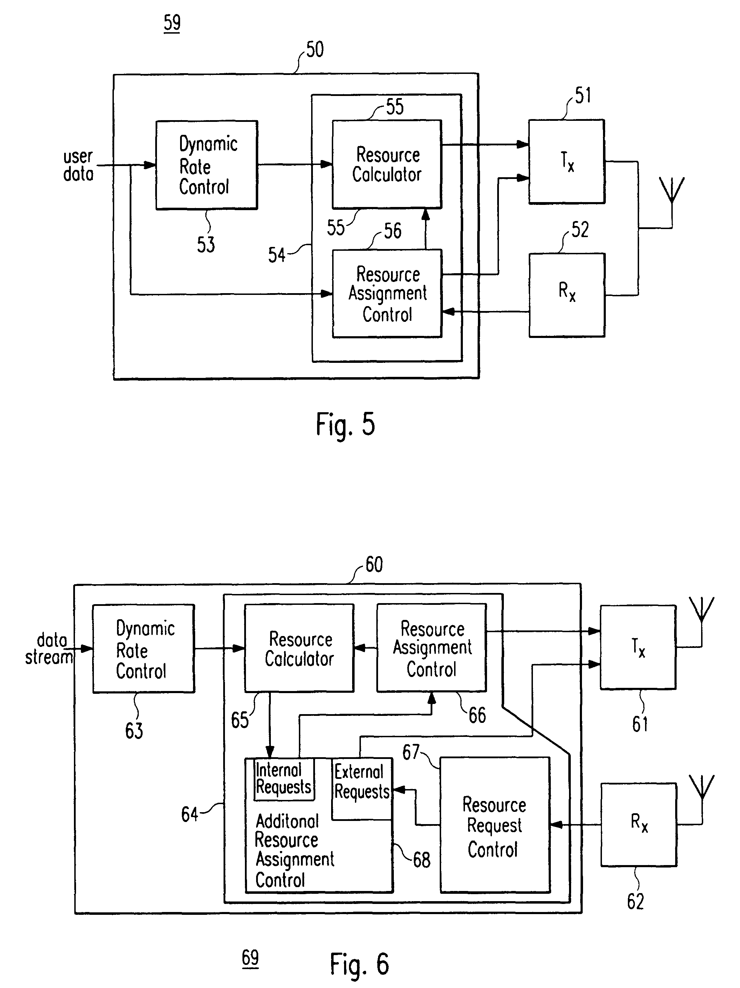

The block diagram of Fig. 5 shows the main components of the transmitting means 50 according to the present invention as implemented on the side of a mobile terminal. User data are examined in a dynamic rate control unit 53 to define the necessary data rate for transmitting the user data. These data can be sent via transmitting means 51 to inform a base station of the transmitting resources needed. In a special embodiment of the present invention, the calculated required data transmission rate is forwarded to a resource control unit 54 wherein a resource calculator 55 estimates whether the data transmission can be handled by the currently available transmission resources or not, and, if not, what amount of additional resources is to be requested from the base station. If necessary, a request is made to the base station for allocating additional subchannels. The base station informs the mobile terminal about the details of the currently allocated additional resources which receives the information by receiving means 52 of the mobile terminal and further processes the information by a resource assignment control 56 within the resource control 54. The resource assignment control 56 supports the mapping of the user data to the blocks 14, 20 or subchannels 41 provided from the base station.

Although only elements essential for the understanding of the present invention are shown in the figures, it is to be understood that further elements, such as e. g. coding means, modulation means and the like which are necessary for the operation of the transmission structure are omitted from the explanation for the sake of clarity.

The structure of a processing means 60 according to the present invention is implemented on a base station as shown in Fig. 6. A data stream, provided for transmission to a mobile terminal is examined in dynamic rate control 63 to define the data rate necessary for the transmission. The resulting value is consecutively converted in the resource calculator 65 of the resource control means 64 in a possible request for an additional resource assignment. If so, the request is forwarded to a defining means 68 which assigns additional resources in the common shared transmission channel either in real time or according to a predefined partitioning scheme. The result of the assignment is forwarded to a resource assignment control 66 which in turn provides the resource calculator 65 with the actual status of the allocated resources and further supports the mapping of the data stream on the block and the subchannels assigned to the respective communication link. Requests for additional resource assignment from mobile terminals are received by receiving means 62 and managed by a resource request control 67, a part of the resource control means 64. The resource request control 67 forwards each request to an additional resource assignment control 68 wherein resources according to one of the described schemes are released for use with that particular mobile terminal. The control information to inform the mobile terminal about the details of the additional resources assigned to it are sent via transmission means 61 to the respective mobile terminal.

The presented transmission structure is not only applicable with OFDM wireless communication systems, but can also be implemented in any mobile communication system which uses a time-frequency grid, e. g. mobile communication systems based on FDMA or TDMA.

## Claims

1. Transmission structure for transmitting data in a wireless communication system, with a transmitting means (51, 61) for transmitting data in transmission channels defined by frequency subcarriers and time slots in a time/frequency grid of the wireless communication system, whereby a fixedly allocated transmission channel for each user and a common shared transmission channel for all users are provided in said time/frequency grid of the wireless communication system, said transmitting means (51, 61) transmitting data in a fixedly allocated transmission channel with one or more frequency subcarriers and consecutive time slots and said transmitting means (51,61), when a data rate transmission exceeding the fixedly allocated resources is required, transmitting additional data in at least a part of said common shared transmission channel.

2. Transmission structure according to claim 1,
**characterized by**
a processing means (50, 60) for determining a required data transmission rate and allocating a respective part of said common shared transmission channel depending on the data transmission rate for the transmission of the data.

3. Transmission structure according to claim 1 or 2,
**characterized in**
**that** a or said processing means (60) assigns said common shared transmission channel completely to a user for a defined period of time.

4. Transmission structure according to claim 1 or 2,
**characterized in**
**that** a or said processing means (60) partitions the common shared transmission channel into several common shared transmission subchannels, whereby one or more respective common shared transmission subchannels are allocated to a user for transmitting additional data.

5. Transmission structure according to claim 4,
**characterized in**
**that** the number of subcarriers and time slots assigned to a common shared transmission subchannel is fixed.

6. Transmission structure according to claim 4,
**characterized in**
**that** the number of subcarriers and time slots assigned to a common shared transmission subchannel varies from one to any other of the common shared transmission subchannels.

7. Transmission structure according to claim 4,
**characterized in**
**that** the number of subcarriers and time slots assigned to a common shared transmission subchannel is fixed in a part of said common shared transmission channel and varies from one common shared transmission subchannel to any other in another part of said common shared transmission channel.

8. Transmission structure according to one of the claims 4 to 7,
**characterized in**
**that** said common shared transmission channel is partitioned into common shared transmission subchannels according to a predefined partitioning scheme.

9. Transmission structure according to one of the claims 4 to 7,
**characterized in**
**that** a defining means (68) defines at least one common shared transmission subchannel within said common shared transmission channel just at the point of time additional data have to be transmitted.

10. Transmission structure according to one of the claims 1 to 9,
**characterized in**
**that** said transmission structure is part of a multiple access scheme.

11. Transmission structure according to claim 10,
**characterized in**
**that** said multiple access scheme is an OFDM system.

12. Transmission structure according to claim 10,
**characterized in**
**that** said multiple access scheme is a FDMA system.

13. Transmission structure according to claim 10,
**characterized in**
**that** said multiple access scheme is a TDMA system.

14. Mobile terminal (59) for a wireless communication system comprising a transmission structure according to one of the claims 1 to 13, whereby a or said processing means (50) determines the required data transmission rate and generates a request message to be transmitted by a transmitting means (51) to a base station (69) for requesting the allocation of at least a part of said common shared transmission channel corresponding to said required additional data transmission rate, and said processing means (50) receives the allocation details from the base station (69) by a receiving means (52) and modulates the data to be transmitted on the allocated transmission channels accordingly.

15. Base station (69) for a wireless communication system comprising a transmission structure according to one of the claims 1 to 13, whereby a or said processing means (60) allocates in response to a request for transmitting additional data by a mobile terminal (59) at least a part of said common shared transmission channel to a communication link established to said mobile terminal (59), and said processing means (60) sends a message to said mobile terminal (59) by a transmitting means (61) comprising allocation details.

16. Base station (69) for a wireless communication system according to claim 15,
**characterized in**
**that** said processing means (60) allocates at least a part of said common shared transmission channel for transmitting additional data by said base station (59).

17. Method for transmitting data in a wireless communication system, in which data are transmitted in transmission channels defined by frequency subcarriers and time slots, in a time/frequency grid of the wireless communication system, whereby a fixedly allocated transmission channel for each user and a common shared transmission channel for all users are provided in said time/frequency grid of the wireless communication system, comprising the steps of
transmitting data in a fixedly allocated transmission channel with one or more frequency subcarriers and consecutive time slots and
when a data rate transmission exceeding the fixedly allocated resources is required, transmitting additional data in at least a part of said common shared transmission channel.

18. Method for transmitting data in a wireless communication system according to claim 17,
**characterized in**
**that** a required data transmission rate is determined and a respective part of said common shared transmission channel is allocated depending on the data transmission rate for the transmission of the data.

19. Method for transmitting data in a wireless communication system according to claim 17 or 18,
**characterized in**
**that** said common shared transmission channel is completely assigned to a user for a defined period of time.

20. Method for transmitting data in a wireless communication system according to claim 17 or 18,
**characterized in**
**that** the common shared transmission channel is partitioned into several common shared transmission subchannels, whereby one or more respective common shared transmission subchannels are allocated to a user for transmitting additional data.

21. Method for transmitting data in a wireless communication system according to claim 20,
**characterized in**
**that** the number of subcarriers and time slots assigned to a common shared transmission subchannel is fixed.

22. Method for transmitting data in a wireless communication system according to claim 20,
**characterized in**
**that** the number of subcarriers and time slots assigned to a common shared transmission subchannel varies from one to any other of the common shared transmission subchannels.

23. Method for transmitting data in a wireless communication system according to claim 20,
**characterized in**
**that** the number of subcarriers and time slots assigned to a common shared transmission subchannel is fixed in a part of said common shared transmission channel and varies from one common shared transmission subchannel to any other in another part of said common shared transmission channel.

24. Method for transmitting data in a wireless communication system according to one of the claims 20 to 23,
**characterized in**
**that** said common shared transmission channel is partitioned into common shared transmission subchannels according to a predefined partitioning scheme.

25. Method for transmitting data in a wireless communication system according to one of the claims 20 to 23,
**characterized in**
**that** at least one common shared transmission subchannel is defined within said common shared transmission channel just at the point of time additional data have to be transmitted.

26. A software program product adapted to perform a method according to one of the claims 17 to 25 when executed by a processing means (50, 60).

## Patentansprüche

1. Übertragungsanordnung zur Übertragung von Daten in einem drahtlosen Kommunikationssystem mit einer Übertragungseinrichtung (51, 61) zur Übertragung von Daten in Übertragungskanälen, die durch Frequenz-Hilfsträger und Zeitschlitze in einem Zeit-/Frequenznetz des drahtlosen Kommunikationssystems festgelegt sind,
wobei ein fest zugewiesener Übertragungskanal für jeden Benutzer und ein gemeinsam genutzter Übertragungskanal für sämtliche Benutzer in dem betreffenden Zeit-/Frequenznetz des drahtlosen Kommunikationssystems vorgesehen sind,
wobei die genannte Übertragungseinrichtung (51, 61) Daten in einem fest zugewiesenen Übertragungskanal mit einem oder mehreren Frequenzhilfsträgern und aufeinanderfolgenden Zeitschlitzen überträgt
und wobei die genannte Übertragungseinrichtung (51, 61) dann, wenn eine Datenratenübertragung erforderlich ist, welche die fest zugewiesenen Ressourcen übersteigt, zusätzliche Daten in zumindest einem Teil des genannten gemeinsam genutzten Übertragungskanals überträgt.

2. Übertragungsanordnung nach Anspruch 1,
**gekennzeichnet durch** eine Verarbeitungseinrichtung (50, 60) zur Bestimmung einer erforderlichen Datenübertragungsrate und zur Zuweisung eines entsprechenden Teiles des genannten gemeinsam genutzten Übertragungskanals in Abhängigkeit von der Datenübertragungsrate für die Übertragung der Daten.

3. Übertragungsanordnung nach Anspruch 1 oder 2,
**dadurch gekennzeichnet, dass** eine oder die genannte Verarbeitungseinrichtung (60) den betreffenden gemeinsam genutzten Übertragungskanal vollständig einem Benutzer für eine definierte Zeitspanne zuweist.

4. Übertragungsanordnung nach Anspruch 1 oder 2,
**dadurch gekennzeichnet, dass** eine oder die genannte Verarbeitungseinrichtung (60) den betreffenden gemeinsam genutzten Übertragungskanal in mehrere gemeinsam genutzte Unterkanäle unterteilt, wobei ein oder mehrere der betreffenden gemeinsam genutzten Übertragungs-Unterkanäle einem Benutzer zur Übertragung von zusätzlichen Daten zugewiesen wird bzw. werden.

5. Übertragungsanordnung nach Anspruch 4, **dadurch gekennzeichnet, dass** die Anzahl der Hilfsträger und Zeitschlitze, die einem gemeinsam genutzten Übertragungs-Unterkanal zugewiesen sind, festliegt.

6. Übertragungsanordnung nach Anspruch 4, **dadurch gekennzeichnet, dass** die Anzahl der Hilfsträger und Zeitschlitze, die einem gemeinsam genutzten Übertragungs-Unterkanal zugewiesen sind, von einem zum anderen der gemeinsam genutzten Unterkanäle variiert.

7. Übertragungsanordnung nach Anspruch 4, **dadurch gekennzeichnet, dass** die Anzahl der Hilfsträger und Zeitschlitze, die einem gemeinsam genutzten Übertragungs-Unterkanal zugewiesen sind, in einem Teil des gemeinsam genutzten Übertragungskanals festliegt und von einem gemeinsam genutzten Übertragungs-Unterkanals zu irgendeinem anderen in einem anderen Teil des gemeinsam genutzten Übertragungskanalsvariiert.

8. Übertragungsanordnung nach einem der Ansprüche 4 bis 7, **dadurch gekennzeichnet, dass** der gemeinsam genutzte Übertragungskanal entsprechend einem vordefinierten Unterteilungssystem in gemeinsam genutzte Übertragungs-Unterkanäle unterteilt ist.

9. Übertragungsanordnung nach einem der Ansprüche 4 bis 7, **dadurch gekennzeichnet, dass** eine Festlegungseinrichtung (68) zumindest einen gemeinsam genutzten Übertragungs-Unterkanal innerhalb des gemeinsam genutzten Übertragungskanals genau zu dem Zeitpunkt festlegt, zu dem zusätzliche Daten zu übertragen sind.

10. Übertragungsanordnung nach einem der Ansprüche 1 bis 9, **dadurch gekennzeichnet, dass** sie Teil eines Vielfach-Zugriffssystems ist.

11. Übertragungsanordnung nach Anspruch 10, **dadurch gekennzeichnet, dass** das genannte Vielfach-Zugriffssystem ein OFDM-System ist.

12. Übertragungsanordnung nach Anspruch 10, **dadurch gekennzeichnet, dass** das genannte Vielfach-Zugriffssystem ein FDMA-System ist.

13. Übertragungsanordnung nach Anspruch 10, **dadurch gekennzeichnet, dass** das genannte Vielfach-Zugriffssystem ein TDMA-System ist.

14. Mobiles Endgerät (59) für ein drahtloses Kommunikationssystem, umfassend eine Übertragungsanordnung nach einem der Ansprüche 1 bis 13,
wobei eine oder die genannte Verarbeitungseinrichtung (50) die erforderliche Datenübertragungsrate bestimmt und eine von einer Übertragungseinrichtung (51) zu einer Basisstation (69) zu übertragende Anforderungsnachricht zur Anforderung der Zuweisung zumindest eines Teiles des genannten gemeinsam genutzten Übertragungskanals entsprechend der betreffenden erforderlichen zusätzlichen Datenübertragungsrate erzeugt
und wobei die genannte Verarbeitungseinrichtung (50) die Zuweisungsdetails von der Basisstation (69) durch eine Empfangseinrichtung (52) empfängt und die zu übertragenden Daten auf den zugewiesenen Übertragungskanälen entsprechend moduliert.

15. Basisstation (69) für ein drahtloses Kommunikationssystem, umfassend eine Übertragungsanordnung nach einem der Ansprüche 1 bis 13,
wobei eine oder die genannte Verarbeitungseinrichtung (60) auf eine Anforderung zur Übertragung von zusätzlichen Daten durch ein mobiles Endgerät (59) zumindest einen Teil des genannten gemeinsam genutzten Übertragungskanals einer Kommunikationsverbindung zuweist, die zu dem betreffenden mobilen Endgerät (59) hergestellt wird bzw. ist,
und wobei die genannte Verarbeitungseinrichtung (60) an das mobile Endgerät (59) mittels einer Übertragungseinrichtung (61) eine Nachricht sendet, welche Zuweisungsdetails umfasst.

16. Basisstation (69) für ein drahtloses Kommunikationssystem nach Anspruch 15, **dadurch gekennzeichnet, dass** die genannte Verarbeitungseinrichtung (60) zumindest einen Teil des genannten gemeinsam genutzten Übertragungskanals zur Übertragung von zusätzlichen Daten durch die genannte Basisstation (59) zuweist.

17. Verfahren zur Übertragung von Daten in einem drahtlosen Kommunikationssystem, in welchem Daten in Übertragungskanälen, die durch Frequenz-Hilfsträger und Zeitschlitze festgelegt sind, in einem Zeit-/Frequenznetz des drahtlosen Kommunikationssystems übertragen werden, wobei ein fest zugewiesener Übertragungskanal für jeden Benutzer und ein gemeinsam genutzter Ubertragungskanal für sämtliche Benutzer in dem genannten Zeit-/Frequenznetz des drahtlosen Kommunikationssystems bereitgestellt werden, umfassend die Schritte:
Übertragen von Daten in einem fest zugewiesenen Übertragungskanal mit einem oder mehreren Frequenz-Hilfsträgern und aufeinanderfolgenden Zeitschlitzen
und Übertragen von zusätzlichen Daten in zumindest einem Teil des genannten gemeinsam genutzten Übertragungskanals, wenn eine Datenratenübertragung erforderlich ist, welche die fest zugewiesenen Ressourcen überschreitet.

18. Verfahren zur Übertragung von Daten in einem drahtlosen Kommunikationssystem nach Anspruch 17,
**dadurch gekennzeichnet, dass** eine erforderliche Datenübertragungsrate bestimmt wird und dass in Abhängigkeit von der Datenübertragungsrate ein entsprechender Teil des genannten gemeinsam genutzten Übertragungskanals für die Übertragung der Daten zugewiesen wird.

19. Verfahren zur Übertragung von Daten in einem drahtlosen Kommunikationssystem nach Anspruch 17 oder 18,
**dadurch gekennzeichnet, dass** der genannte gemeinsam genutzte Übertragungskanal einem Benutzer für eine definierte Zeitspanne vollständig zugewiesen wird.

20. Verfahren zur Übertragung von Daten in einem drahtlosen Kommunikationssystem nach Anspruch 17 oder 18,
**dadurch gekennzeichnet, dass** der gemeinsam genutzte Übertragungskanal in mehrere gemeinsam genutzte Übertragungs-Unterkanäle unterteilt wird, wobei ein oder mehrere der betreffenden gemeinsam genutzten Übertragungs-Unterkanäle einem Benutzer zur Übertragung von zusätzlichen Daten zugewiesen wird bzw. werden.

21. Verfahren zur Übertragung von Daten in einem drahtlosen Kommunikationssystem nach Anspruch 20,
**dadurch gekennzeichnet, dass** die Anzahl der Hilfsträger und Zeitschlitze, die einem gemeinsam genutzten Übertragungs-Unterkanal zugewiesen werden, festliegt.

22. Verfahren zur Übertragung von Daten in einem drahtlosen Kommunikationssystem nach Anspruch 20,
**dadurch gekennzeichnet, dass** die Anzahl der Hilfsträger und Zeitschlitze, die einem gemeinsam genutzten Übertragungs-Unterkanal zugewiesen werden, von einem zum anderen der gemeinsam genutzten Übertragungs-Unterkanäle. variiert.

23. Verfahren zur Übertragung von Daten in einem drahtlosen Kommunikationssystem nach Anspruch 20,
**dadurch gekennzeichnet, dass** die Anzahl der Hilfsträger und Zeitschlitze, die einem gemeinsam genutzten Übertragungs-Unterkanal zugewiesen werden, in einem Teil des betreffenden gemeinsam genutzten Übertragungskanals festliegt und von einem gemeinsam genutzten Übertragungs-Unterkanal zu einem anderen in einem anderen Teil des genannten gemeinsam genutzten Übertragungskanals variiert.

24. Verfahren zur Übertragung von Daten in einem drahtlosen Kommunikationssystem nach einem der Ansprüche 20 bis 23,
**dadurch gekennzeichnet, dass** der genannte gemeinsam genutzte Übertragungskanal entsprechend einem vordefinierten Unterteilungssystem in gemeinsam genutzte Übertragungs-Unterkanäle unterteilt wird.

25. Verfahren zur Übertragung von Daten in einem drahtlosen Kommunikationssystem nach einem der Ansprüche 20 bis 23,
**dadurch gekennzeichnet, dass** zumindest ein gemeinsam genutzter Übertragungs-Unterkanal innerhalb des betreffenden gemeinsam genutzten Übertragungskanals genau zu dem Zeitpunkt bestimmt wird, zu dem zusätzliche Daten zu übertragen sind.

26. Software-Programmprodukt, das geeignet ist, ein Verfahren nach einem der Ansprüche 17 bis 25 auszuführen, wenn es durch eine Verarbeitungseinrichtung (50, 60) ausgeführt wird.

## Revendications

1. Structure de transmission pour transmettre des données dans un système de communication sans fil, comportant des moyens de transmission (51, 61) pour transmettre des données dans des canaux de transmission définis par des sous-porteuses de fréquences et des créneaux temporels dans une grille de temps/fréquences du système de communication sans fil, dans laquelle un canal de transmission alloué de façon fixe pour chaque utilisateur et un canal de transmission commun partagé pour tous les utilisateurs sont prévus dans ladite grille de temps/fréquences du système de communication sans fil, lesdits moyens de transmission (51, 61) transmettant des données dans un canal de transmission alloué de façon fixe, avec une ou plusieurs sous-fréquences ou sous-porteuses de fréquences et des créneaux temporels successifs et, lorsqu'une cadence de transmission de données dépassant les ressources allouées de façon fixe est requise, lesdits moyens de transmission (51, 61) transmettant des données additionnelles dans au moins une partie dudit canal de transmission commun partagé.

2. Structure de transmission selon la revendication 1, **caractérisée par**
un moyen de traitement (50, 60) pour déterminer une cadence requise de transmission de données et allouer une partie respective dudit canal de transmission commun partagé en fonction de la cadence de transmission de données pour la transmission des données.

3. Structure de transmission selon la revendication 1 ou 2, **caractérisée en ce**
**qu'**un ou ledit moyen de traitement (60) affecte complètement ledit canal de transmission commun partagé à un utilisateur pendant un intervalle de temps défini.

4. Structure de transmission selon la revendication 1 ou 2, **caractérisée en ce**
**qu'**un ou ledit moyen de traitement (60) divise le canal de transmission commun partagé en plusieurs sous-canaux de transmission communs partagés, un ou plusieurs sous-canaux de transmission communs partagés respectifs étant alloués à un utilisateur pour la transmission de données additionnelles.

5. Structure de transmission selon la revendication 4, **caractérisée en ce**
**que** le nombre de sous-porteuses et de créneaux temporels affectés à un sous-canal de transmission commun partagé est fixé.

6. Structure de transmission selon la revendication 4, **caractérisée en ce**
**que** le nombre de sous-porteuses et de créneaux temporels affectés à un sous-canal de transmission commun partagé varie d'un sous-canal de transmission commun partagé à n'importe quel autre des sous-canaux de transmission communs partagés.

7. Structure de transmission selon la revendication 4, **caractérisée en ce**
**que** le nombre de sous-porteuses et de créneaux temporels affectés à un sous-canal de transmission commun partagé est fixé dans une partie dudit canal de transmission commun partagé et varie d'un sous-canal de transmission commun partagé à n'importe quel autre canal de transmission commun partagé dans une autre partie dudit canal de transmission commun partagé.

8. Structure de transmission selon l'une des revendications 4 à 7, **caractérisée en ce**
**que** ledit second canal de transmission commun partagé est subdivisé en des sous-canaux de transmission communs partagés conformément à un système de séparation prédéfini.

9. Structure de transmission selon l'une des revendications 4 à 7, **caractérisée en ce**
**qu'**un moyen de définition (68) définit au moins un sous-canal de transmission commun partagé à l'intérieur dudit canal de transmission commun partagé à l'instant où des données additionnelles doivent être transmises.

10. Structure de transmission selon l'une des revendications 1 à 9, **caractérisée en ce**
**que** ladite structure de transmission fait partie d'un système d'accès multiples.

11. Structure de transmission selon la revendication 10, **caractérisée en ce**
**que** ledit système d'accès multiples est un système OFDM.

12. Structure de transmission selon la revendication 10, **caractérisée en ce**
**que** ledit système d'accès multiple est un système FDMA.

13. Structure de transmission selon la revendication 10, **caractérisée en ce**
**que** ledit système d'accès multiples est un système TDMA.

14. Terminal mobile (59) pour un système de communication sans fil comprenant une structure de transmission selon l'une des revendications 1 à 13, dans lequel
un ou ledit moyen de traitement (50) détermine la vitesse requise de transmission de données et produit un message de demande devant être transmis par les moyens de transmission (51) à une station de base (69) pour demander l'affectation d'au moins une partie dudit canal de transmission commun partagé correspondant à ladite cadence additionnelle requise de transmission de données, et ledit moyen de traitement (50) reçoit les détails d'affectation provenant de là station de base (69) par des moyens de réception (52) et module de façon correspondante les données devant être transmises dans les canaux de transmission alloués.

15. Station de base (69) pour un système de communication sans fil comprenant une structure de transmission selon l'une des revendications 1 à 13, dans laquelle
un ou ledit moyen de traitement (60) alloue, en réponse à une demande de transmission de données additionnelles par un terminal mobile (59), au moins une partie dudit canal de transmission commun partagé à une liaison de communication établie dans ledit terminal mobile (59), et ledit moyen de traitement (60) envoie un message audit terminal mobile (59) par des moyens de transmission (61) comprenant des détails d'affectation.

16. Station de base (69) pour un système de communication sans fil selon la revendication 15, **caractérisé en ce**
**que** ledit moyen de traitement (60) affecte au moins une partie dudit canal de transmission commun partagé pour la transmission de données additionnelles par ladite station de base (59).

17. Procédé de transmission de données pour un système de communication sans fil, dans lequel des données sont transmises dans des canaux de transmission définis par des sous-porteuses de fréquences et des créneaux temporels, dans une grille temps/fréquences du système de communication sans fil, selon lequel un canal de transmission alloué de façon fixe pour chaque utilisateur et un canal de transmission commun partagé pour tous les utilisateurs sont prévus dans ladite grille temps/fréquences du système de communication sans fil, comprenant les étapes consistant à:
transmettre des données dans un canal de transmission alloué de façon fixe, avec une ou plusieurs sous-porteuses de fréquences et des créneaux temporels successifs, et
lorsqu'une cadence de transmission de données dépasse les ressources allouées de façon fixe est requise, la transmission de données additionnelles est exécutée dans au moins une partie dudit canal de transmission commun partagé.

18. Procédé de transmission de données dans un système de communication sans fil selon la revendication 17, **caractérisé en ce**
**qu'**une vitesse requise de transmission de données est déterminée et qu'une partie respective dudit canal de transmission commun partagé est affectée, en fonction de la cadence de transmission de données, à la transmission des données.

19. Procédé de transmission de données dans un système de communication sans fil selon la revendication 17 ou 18, **caractérisé en ce**
**que** ledit canal de transmission commun partagé est complètement affecté à un utilisateur pour un intervalle de temps défini.

20. Procédé de transmission de données dans un système de communication sans fil selon la revendication 17 ou 18, **caractérisé en ce**
**que** le canal de transmission commun partagé est subdivisé en une pluralité de sous-canaux de transmission communs partagés, un ou plusieurs sous-canaux de transmission communs partagés respectifs étant affectés à un utilisateur pour la transmission de données additionnelles.

21. Procédé de transmission de données dans un système de communication sans fil selon la revendication 20, **caractérisé en ce**
**que** le nombre de sous-porteuses et de créneaux temporels affectés à un sous-canal de transmission commun partagé est fixé.

22. Procédé de transmission de données dans un système de communication sans fil selon la revendication 20, **caractérisé en ce**
**que** le nombre de sous-porteuses et de créneaux temporels, affectés à un sous-canal de transmission commun partagé, varie de l'un à n'importe quel autre des sous-canaux de transmission commun partagé.

23. Procédé de transmission de données dans un système de communication sans fil selon la revendication 20, **caractérisé en ce**
**que** le nombre de sous-porteuses et de créneaux temporels, affectés par un sous-canal de transmission commun partagé, est fixé dans une partie dudit canal de transmission commun partagé et varie d'un sous-canal de transmission commun partagé à un n'importe quel autre sous-canal de transmission commun partagé dans une autre partie dudit canal de transmission commun partagé.

24. Procédé de transmission de données dans un système de communication sans fil selon l'une des revendications 20 à 23, **caractérisé en ce**
**que** ledit canal de transmission commun partagé est subdivisé en des sous-canaux de transmission communs partagés conformément à un système de séparation prédéfini.

25. Procédé de transmission de données dans un système de communication sans fil selon l'une des revendications 20 à 23, **caractérisé en ce**
**qu'**au moins un sous-canal de transmission commun partagé est défini dans ledit canal de transmission commun partagé précisément à l'instant où des données additionnelles doivent être transmises.

26. Produit de programme logiciel adapté pour exécuter un procédé selon l'une des revendications 17 à 25, lorsqu'il est exécuté par des moyens de traitement (50, 60).
